# EUROPEAN PATENT APPLICATION

(11) **EP 3 608 526 A1**
(43) Date of publication of application: **12.02.2020**
(21) Application number: 17910031.8
(22) Date of filing: 17.05.2017
(51) Int. Cl.: F02D 41/40

(54) **FUEL INJECTION CONTROL METHOD AND FUEL INJECTION CONTROL DEVICE FOR DIESEL ENGINE**

(71) Applicant: Mazda Motor Corporation, Aki-gun Hiroshima 730-8670 (JP)
(72) Inventor: SHIRAHASHI, Naotoshi, Hiroshima 730-8670 (JP); MORI, Tsunehiro, Hiroshima 730-8670 (JP); IWATA, Haruaki, Hiroshima 730-8670 (JP); YAMAMOTO, Takahiro, Hiroshima 730-8670 (JP)
(74) Representative: Müller-Boré & Partner Patentanwälte PartG mbB
(86) International application number: PCT/JP2017/018552
(87) International publication number: WO 2018/211631

(57) **Abstract**

A fuel injection control system for a diesel engine is configured to, during one combustion cycle, perform multiple fuel injections to induce multiple combustions in a cylinder. A PCM 70 controls fuel injection of the diesel engine. The PCM 70 is configured to execute control for: at a first timing during compression stroke, starting a first fuel injection; a second timing during the compression stroke at which a time period corresponding to a first crank angle period has elapsed after a completion of the first fuel injection, starting a second fuel injection; and, at a third timing around a top dead center of the compression stroke at which a time period corresponding to a second crank angle period has been elapsed after a completion of the second fuel injection, starting a third fuel injection. The second crank angle period is less than the first crank angle period.

## Description

### TECHNICAL FIELD

The present invention relates to a fuel injection control method and a fuel injection control system for a diesel engine configured to, during one combustion cycle, perform multiple fuel injections to induce multiple combustions in a cylinder.

### BACKGROUND ART

Heretofore, various attempts have been made to reduce sound noise of a diesel engine (particularly, sound noise caused by engine knocking; hereinafter referred to simply as "knocking sound"). For example, the following Patent Document 1 proposes a technique of calculating, as a target value of a generation time lag between successive two of a plurality of combustion pressure waves generated, respectively, by multiple fuel injections, a time lag for enabling a pressure level in a high frequency region to be reduced by means of interference between the successive combustion pressure waves, and controlling, based on this target value, an interval between successive two of the multiple fuel injections. This technique is intended to control the fuel injection interval to reduce a frequency component of an in-cylinder pressure at a specific frequency band (2.8 to 3.5 kHz), thereby achieving the reduction of the knocking sound. Here, the "combustion pressure wave" is a pressure wave generated by a phenomenon that an in-cylinder pressure rapidly rises according to combustion in an engine, and is equivalent to a result obtained by temporally differentiating a waveform of the in-cylinder pressure.

Meanwhile, a knocking sound emitted from an engine body has properties depending on a vibration transmission characteristic of the structure (component assembly) of the engine body, particularly, a resonant frequency of the structure of the engine body. Specifically, the knocking sound tends to become larger in a frequency band including the resonant frequency of the structure of the engine body (resonances of a plurality of components on a main transmission path of the engine body are combined to form a frequency band having a certain level of width. In the following description, such a resonant frequency-related bond will be referred to as "resonant frequency band"). Generally, in the structure of the engine body, there are a plurality of resonant frequency bands. Thus, the technique described in the Patent Document 1 can reduce only a knocking sound having a specific frequency band of 2.8 to 3.5 kHz, but fails to adequately reduce respective knocking sounds corresponding to the plurality of resonant frequency bands of the structure of the engine body.

Here, the knocking sound has a characteristic depending on an in-cylinder pressure level equivalent to a combustion-generated vibration exciting force, in addition to the above resonance of the structure of the engine body (The in-cylinder pressure level, generally called "CPL (Cylinder Pressure Level)", means high frequency energy derived by subjecting an in-cylinder pressure waveform as an index of a combustion-generated vibration excitation force to Fourier transform. This term will hereinafter be abbreviated as "CPL"). The CPL has a value depending on a heat release rate indicative of an in-cylinder combustion state, wherein a waveform of the heat release rate is changed under the influence of environmental conditions such as temperature and pressure, and the knocking sound comes under the influence of the shape of the waveform of the heat release rate. Therefore, for adequately reducing the knocking sound, it is desirable to set an interval between successive two of the multiple fuel injections, based on a timing at which the heat release rate becomes maximum (have a peak), which reflects the influence of environmental conditions such as temperature and pressure.

A technique intended to achieve the reduction of a knocking sound corresponding to each of the structure of the engine body with a focus on the above point is disclosed in, e.g., the following Patent Document 2. In the technique disclosed in the Patent Document 2, an interval between successive two of multiple fuel injections is controlled to allow valley regions of a waveform indicative of a frequency characteristic of a combustion pressure wave generated by multiple combustions to fall within respective ranges of a plurality of resonant frequency bands of the structure of an engine body, thereby reducing a knocking sound corresponding to each of the plurality of resonant frequency bands of the structure of an engine body.

In the following description, fuel injection control to be performed to reduce a knocking sound corresponding to a specific frequency (typically, each of the resonant frequencies of the structure) of an engine body, as disclosed in the Patent Document 2, will be referred to as "frequency control" as appropriate.

### CITATION LIST

### [Patent Document]

Patent Document 1: JP 2002-047975A
Patent Document 2: JP 2016-217215A

### SUMMARY OF INVENTION

### [Technical Problem]

The frequency control is capable of reducing a knocking sound corresponding to each of the plurality of frequency bands such as resonant frequency components, as mentioned above, but is insufficient to reduce the level of a combustion sound in whole. Particularly, in a low engine load range of the diesel engine, the level of the combustion sound becomes larger, as comparted with mechanical noise, traveling noise, or intake/exhaust noise, so that the knocking sound becomes prominent. As means to lower the level of the combustion sound, it is conceivable to lower the maximum combustion pressure. However, this technique causes an increase in smoke amount (amount of production of soot) and deterioration in fuel consumption.

The present invention has been made to solve the above conventional problem, and an object thereof is to provide a diesel engine fuel injection method and system capable of adequately reducing a knocking sound without causing deterioration in smoke emissions and fuel consumption.

### [Solution to Technical Problem]

In order to solve the above problem, according to one aspect of the present invention, there is provided a fuel injection control method for a diesel engine configured to, during one combustion cycle, perform multiple fuel injections to induce multiple combustions in a cylinder. The method includes: starting a first fuel injection, at a first timing during compression stroke; starting a second fuel injection, at a second timing during the compression stroke at which a time period corresponding to a first crank angle period (width) has elapsed after a completion of the first fuel injection; and starting a third fuel injection, at a third timing around a top dead center of the compression stroke at which a time period corresponding to a second crank angle period has been elapsed after a completion of the second fuel injection, wherein the second crank angle period is less than the first crank angle period.

In the fuel injection control method of the present invention having the above feature, the first fuel injection and the second fuel injection are performed in sequence, and then the third fuel injection is performed around top dead center of compression stroke, i.e., multiple fuel injections comprising at least two pre-stage injections and a main injection are performed. In this process, an injection interval between successive two of the fuel injections is set depending on a crank angle period. Specifically, the injection interval defined by a crank angle period is gradually reduced in a direction toward a post-stage side (retard side).

In this way, the pre-stage injections are performed at adequate injection intervals, so that heat can be continuously released toward the main injection, thereby raising an in-cylinder heat amount and thus an in-cylinder pressure at the time of start of a main combustion. Thus, it is possible to moderate the gradient of the in-cylinder pressure until it reaches the maximum in-cylinder pressure caused by the main combustion, thereby adequately reducing a high frequency component of a knocking sound. Therefore, the fuel injection control method of the present invention can adequately reduce a knocking sound without causing deterioration in exhaust emissions such as smoke and deterioration in fuel consumption.

Preferably, the fuel injection control method of the present invention further includes gradually increasing each of the first and second crank angle periods, as an engine speed of the diesel engine becomes higher.

According to this feature, even when a time period corresponding to a combustion cycle period changes according to the engine speed, the pre-stage injections can be performed at adequate injection intervals.

Preferably, in the fuel injection control method of the present invention, a rate of increase of the first crank angle period with respect to an increase of the engine speed is substantially equal to a rate of increase of the second crank angle period with respect to the increase of the engine speed.

According to this feature, injection intervals between successive ones of the multiple fuel injections are changed at approximately equal rates according to the engine speed, so that it is possible to maintain a relationship among the injection intervals approximately constant even when the engine speed changes.

Preferably, in the fuel injection control method of the present invention, each of the first and second crank angle periods is substantially constant, irrespective of a change in an engine load of the diesel engine.

According to this feature, the injection interval defined by the crank angle period can be maintained approximately constant, because, even if the engine load changes, the time period corresponding to the combustion cycle period does not change, differently from the case where the engine speed changes.

Preferably, the fuel injection control method of the present invention further includes setting an injection amount of the second fuel injection to be greater than an injection amount of the first fuel injection, and setting an injection amount of the third fuel injection to be greater than the injection amount of the second fuel injection.

According to this feature, the fuel injection amounts of the pre-stage injections are stepwisely increased toward the main injection, so that it is possible to continuously increase the heat release rate more effectively through the pre-stage injections.

According to another aspect of the present invention, there is provided a fuel injection control system for a diesel engine configured to, during one combustion cycle, perform multiple fuel injections to induce multiple combustions in a cylinder. The system includes: a fuel supply device for injecting fuel into the cylinder; and a controller for controlling the fuel supply device, wherein the controller is configured to control the fuel supply device to: start a first fuel injection, at a first timing during compression stroke; start a second fuel injection, at a second timing during the compression stroke at which a time period corresponding to a first crank angle period has elapsed after a completion of the first fuel injection; and start a third fuel injection, at a third timing around a top dead center of the compression stroke at which a time period corresponding to a second crank angle period has been elapsed after a completion of the second fuel injection, wherein the second crank angle period is less than the first crank angle period.

In the fuel injection control system of the present invention having the above feature, heat can also be continuously released toward the main injection, thereby raising the in-cylinder heat amount and thus the in-cylinder pressure at the time of start of the main combustion. Thus, it is possible to moderate the gradient of the in-cylinder pressure until it reaches the maximum in-cylinder pressure caused by the main combustion, thereby adequately reducing a high frequency component of the knocking sound without causing deterioration in smoke emissions and fuel consumption.

Preferably, in the fuel injection control system of the present invention, the controller is configured to control the fuel supply device to gradually increase each of the first and second crank angle periods, as an engine speed of the diesel engine becomes higher.

According to this feature, even when a time period corresponding to a combustion cycle period changes according to the engine speed, the pre-stage injections can be performed at adequate injection intervals.

Preferably, in the fuel injection control system of the present invention, the controller is configured to control the fuel supply device such that a rate of increase of the first crank angle period with respect to an increase of the engine speed is substantially equal to a rate of increase of the second crank angle period with respect to the increase of the engine speed.

According to this feature, injection intervals between successive ones of the multiple fuel injections are changed at substantially equal rates according to the engine speed, so that it is possible to maintain a relationship among the injection intervals approximately constant even when the engine speed changes.

Preferably, in the fuel injection control system of the present invention, the controller is configured to control the fuel supply device such that each of the first and second crank angle periods is substantially constant, irrespective of a change in an engine load of the diesel engine.

According to this feature, each the injection intervals defined by the crank angle period can be maintained substantially constant, because, even if the engine load changes, the time period corresponding to the combustion cycle period does not change, differently from the case where the engine speed changes.

Preferably, in the fuel injection control system of the present invention, the controller is configured to control the fuel supply device to set an injection amount of the second fuel injection to be greater than an injection amount of the first fuel injection, and set an injection amount of the third fuel injection to be greater than the injection amount of the second fuel injection.

According to this feature, the fuel injection amounts of the pre-stage injections are stepwisely increased toward the main injection, so that it is possible to continuously increase the heat release rate more effectively through the pre-stage injections.

### [Effect of Invention]

The diesel engine fuel injection method and system of the present invention can adequately reduce a knocking sound without causing deterioration in smoke emissions and fuel consumption.

### BRIEF DESCRIPTION OF DRAWINGS

FIG. 1 is a schematic diagram showing an overall configuration of a diesel engine employing a diesel engine fuel injection control system according to one embodiment of the present invention.
FIG. 2 is a block diagram showing a control system of the diesel engine in this embodiment.
FIG. 3 is a time chart showing a typical fuel injection pattern used in this embodiment.
FIG. 4 shows graphs indicating a heat release rate and a CPL, obtained in two actual traveling scenes in which there is a large difference in knocking sound therebetween.
FIG. 5 shows simulation results obtained when combustion attained in a full engine load range is reproduced in a partial engine load range.
FIG. 6 shows simulation results in each of which a combustion waveform obtained by reproducing combustion attained in the full engine load range, in the partial engine load range, is compared with a combustion waveform having the minimum gradient of the heat release rate.
FIG. 7 shows simulation results of a derived ideal combustion waveform.
FIG. 8 shows graphs indicating a relationship between an engine load and an ignition delay period.
FIG. 9 is a schematic diagram showing examples of fuel injection patterns, respectively, in the partial engine load range and in the full engine load range.
FIG. 10 is a schematic diagram showing examples of fuel injection patterns in which the number of times of injection is increased in the partial engine load range.
FIG. 11 shows conceptual diagrams for explaining combustion produced when the number of times of injection is increased in the partial engine load range.
FIG. 12 shows graphs indicating the ignition delay period occurring when the number of times of injection is increased in the partial engine load range.
FIG. 13 is a schematic diagram showing an example of a fuel injection pattern used in the partial engine load range.
FIG. 14 is a graph showing a combustion waveform obtained when using a 7-stage reference injection pattern.
FIG. 15 shows graphs indicating the CPL and a smoke amount as measured when using the 7-stage reference injection pattern.
FIG. 16 shows graphs indicating combustion waveforms obtained when using first and second 7-stage improved injection patterns.
FIG. 17 shows graphs indicating, the CPL and the smoke amount as measured when using the first and second 7-stage improved injection patterns.
FIG. 18 shows explanatory diagrams of a multistage injection sensitivity adjustment method to be performed to clarify mechanisms of the CPL and the smoke amount.
FIG. 19 shows graphs indicating check results of each fuel injection of a multistage injection in the partial engine load range.
FIG. 20 is a graph showing a combustion waveform in accordance with a fuel injection pattern obtained by calibration based on the mechanisms of the CPL and the smoke amount.
FIG. 21 shows graphs indicating various results obtained when a 6-stage improved injection pattern is used in the partial engine load range.
FIG. 22 is an explanatory diagram of the content of control to be executed by a PCM in this embodiment.
FIG. 23 is a graph showing a relationship between an engine speed and each injection interval defined by a crank angle period.
FIG. 24 is a graph showing a relationship between the engine load and each injection interval defined by the crank angle period.
FIG. 25 is a flowchart showing fuel injection control processing in this embodiment.

### DESCRIPTION OF EMBODIMENTS

With reference to the accompanying drawings, a diesel engine fuel injection control method and a diesel engine fuel injection control system according to embodiments of the present invention will now be described.

### < System Configuration >

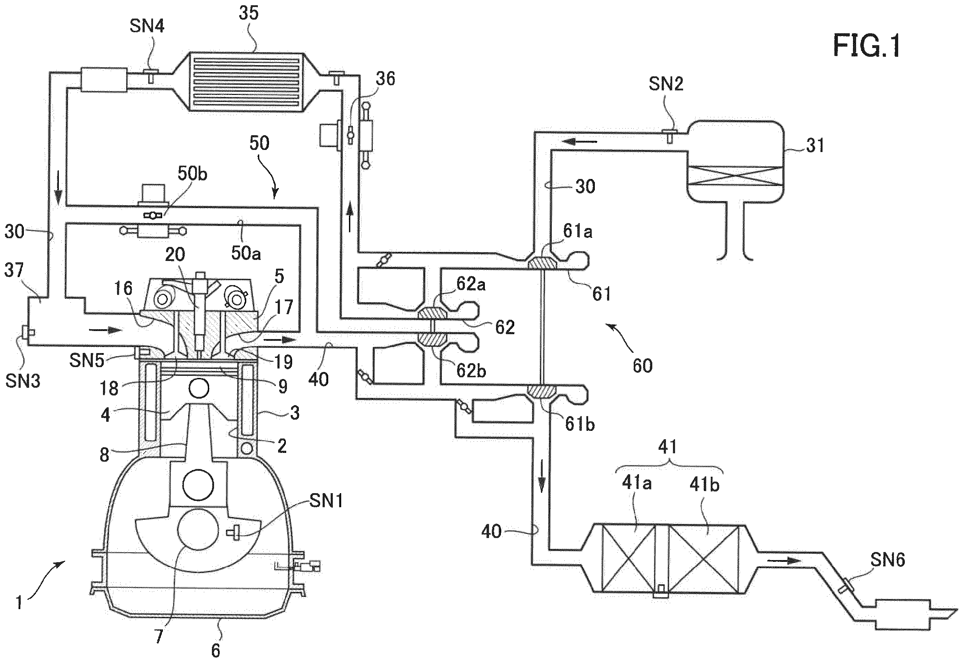

FIG. 1 is a schematic diagram showing an overall configuration of a diesel engine employing a diesel engine fuel injection control system according to one embodiment of the present invention.

The diesel engine shown in FIG. 1 is a four-stroke diesel engine to be mounted in a vehicle to serve as a traveling power source. Specifically, this diesel engine comprises: an engine body 1 having a plurality of cylinders 2 and configured to be driven while receiving a supply of fuel consisting mainly of light oil; an intake passage 30 for introducing combustion air to the engine body 1; an exhaust passage 40 for discharging exhaust gas produced in the engine body 1; an EGR device 50 for recirculating a part of exhaust gas passing through the exhaust passage 40 to the intake passage 30; and a turbocharger 60 configured to be driven by exhaust gas passing through the exhaust passage 40.

The intake passage 30 is provided with an air cleaner 31, two compressors 61a, 62a of the turbocharger 60, a throttle valve 36, an intercooler 35, and a surge tank 37, which are arranged in this order from an upstream side thereof. A portion of the intake passage 30 located downstream of the surge tank 37 is formed as a plurality of independent passages each communicating with a respective one of the cylinders 2. Thus, gas in the surge tank 37 is distributed to the respective cylinders 2 through the independent passages.

The exhaust passage 40 is provided with two turbines 62b, 61b of the turbocharger 60, and an exhaust gas purifying device 41, which are arranged in this order from an upstream side thereof.

The turbocharger 60 is constructed as a two-stage supercharging system capable of efficiently obtaining high supercharging in the entire engine speed range from a low engine speed range having low exhaust energy to a high engine speed range. More specifically, the turbocharger 60 comprises a large-size turbocharger 61 for supercharging a large amount of air in the high engine speed range, and a small-size turbocharger 62 capable of efficiently performing supercharging even by low exhaust energy, wherein the turbocharger 60 is configured to switch between a supercharging operation by the large-size turbocharger 61 and a supercharging operation by the small-size turbocharger 62, depending on an engine operating state (engine speed and load). In this turbocharger 60, the turbine 61b (62b) is rotated by receiving energy of exhaust gas flowing through the exhaust passage 40, and the compressor 61a (62a) is rotated interlockingly with the rotation to thereby compress (supercharge) air flowing through the intake passage 30.

The intercooler 35 is designed to cool air compressed by one or both of the compressors 61a, 62a.

The throttle valve 36 is designed to open and close the intake passage 30. In this embodiment, fundamentally, the throttle valve 36 is configured such that it is maintained in a fully open position or a highly opened position close to the fully open position during running of the engine, and is closed to shut the intake passage 30 only when needed, e.g., during shut-down of the engine.

The exhaust gas purifying device 41 is designed to purify harmful components contained in exhaust gas. In this embodiment, the exhaust gas purifying device 41 comprises an oxidation catalyst converter 41a for oxidizing CO and HC contained in exhaust gas, and a DPF 41b for capturing soot contained in exhaust gas.

The EGR device 50 is designed to recirculate a part of exhaust gas to an intake side. The EGR device 50 comprises: an EGR passage 50a connecting a portion of the exhaust passage 40 located upstream of the turbine 62b to a portion of the intake passage 30 located downstream of the intercooler 35; and an EGR valve 50b configured to open and close the EGR passage 50a, wherein the EGR device 50 is configured to recirculate, to the intake side, a part of relatively high-pressure exhaust gas (high-pressure EGR gas) discharged to the exhaust passage 40.

The engine body 1 comprises: a cylinder block 3 having the cylinders 2 each formed thereinside to extend in an upward-downward direction; a plurality of pistons 4 each received in a respective one of the cylinders 2 in a reciprocatingly movable (upwardly and downwardly movable) manner; a cylinder head 5 provided to cover edge faces (upper surfaces) of the cylinders 2 from a side opposed to crown surfaces of the pistons 4; and an oil pan 6 provided on an underside of the cylinder block 3 to store therein lubricating oil.

The piston 4 is coupled to a crankshaft 7 serving as an output shaft of the engine body 1, via a connecting rod 8. In each of the cylinders 2, a combustion chamber 9 is defined above the piston 4, to allow fuel injected thereinto from an aftermentioned fuel injector 20 serving as a fuel supply device to be diffusively combusted while being mixed with air. Then, according to expansion energy arising from the combustion, the piston 4 is reciprocatingly moved to rotate the crankshaft 7 about an axis thereof. Each of the pistons 4 is provided with a dynamic vibration absorber for suppressing stretching resonance in the connecting rod 8. This dynamic vibration absorber will be described later.

In the diesel engine depicted in FIG. 1, a geometric compression ratio of the engine body 1, i.e., a ratio of a combustion chamber volume at a time when the piston 4 is located at bottom dead center to a combustion chamber volume at a time when the piston 4 is located at top dead center is set to 12 to 15 (e.g., 14). The values "12 to 15" of the geometric compression ratio are fairly low for diesel engines. This is intended to suppress a combustion temperature to thereby improve exhaust emission performance and thermal efficiency.

With respect to each of the cylinders 2, the cylinder head 5 is formed with an intake port 16 for introducing air supplied from the intake passage 30, to the combustion chamber 9, and an exhaust port 17 for introducing exhaust gas produced in the combustion chamber 9, to the exhaust passage 40, and provided with an intake valve 18 for opening and closing an opening of the intake port 16 on the side of the combustion chamber 9, and an exhaust valve 19 for opening and closing an opening of the exhaust port 17 on the side of the combustion chamber 9.

Further, with respect to each of the cylinders 2, the cylinder head 5 is provided with a fuel injector 20 for injecting fuel into the combustion chamber 9. This fuel injector 20 is attached in a posture where a distal end thereof on the side of the piston 4 faces a central region of a cavity (not illustrated) which is a concaved portion provided on the crown surface of the piston 4. The fuel injector 20 is connected to a fuel accumulator (not illustrated) in a common rail fuel injection system via a fuel flow passage. High-pressure fuel pressurized by a fuel pump (not illustrated) is stored in the fuel accumulator. The fuel injector 20 is configured to receive a supply of fuel from the fuel accumulator and inject the fuel into the combustion chamber 9. Between the fuel pump and the fuel accumulator, a fuel pressure regulator (not illustrated) is provided to adjust an internal pressure of the fuel accumulator, i.e., an injection pressure which is a pressure of fuel to be injected from the fuel injector 20.

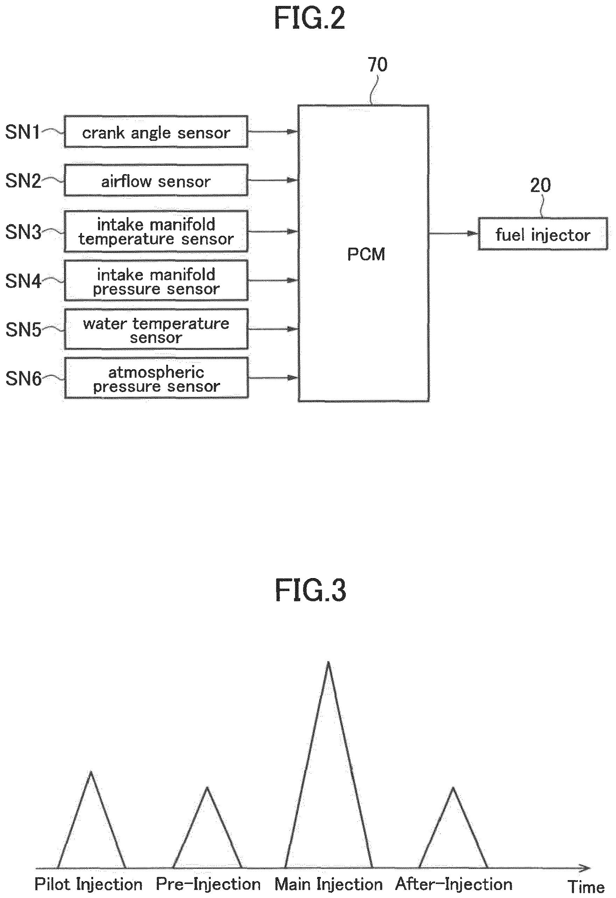

Next, with reference to FIG. 2, a control system of the diesel engine in this embodiment will be described. FIG. 2 is a block diagram showing the diesel engine control system. As shown in FIG. 2, the diesel engine in this embodiment is configured to be generally controlled by a PCM (Powertrain Control Module) 70. The PCM 70 is composed of a microprocessor comprising a CPU, a ROM and a RAM.

The PCM 70 is electrically connected to various sensors for detecting an engine operating state.

For example, the cylinder block 3 is provided with a crank angle sensor SN1 for detecting a rotational angle (crank angle) and a rotational speed of the crankshaft 7. This crank angle sensor SN1 is configured to output a pulse signal according to rotation of a crank plate (not illustrated) rotated integrally with the crankshaft 7. Based on the pulse signal, the rotational angle of the crankshaft 7 and the rotational speed of the crankshaft 7 (i.e., engine speed) will be specified.

At a position adjacent to the air cleaner 31 (at a position between the air cleaner 31 and the compressor 61a), the intake passage 30 is provided with an airflow sensor SN2 for detecting the amount of air (fresh air) passing through the air cleaner 31, i.e., air to be taken into the cylinders 2.

The surge rank 37 is provided with an intake manifold temperature sensor SN3 for detecting a temperature of gas in the surge rank 37, i.e., gas to be taken into the cylinders 2.

At a position downstream of the intercooler 35, the intake passage 30 is provided with an intake manifold pressure sensor SN4 for detecting a pressure of air passing through this position, i.e., air to be eventually taken into the cylinders 2.

The engine body 1 is provided with a water temperature sensor SN5 for detecting a temperature of cooling water for cooling the engine body 1. Further, an atmospheric pressure sensor SN6 is provided to detect atmospheric pressure.

The PCM 70 is configured to control engine components while performing various determinations, calculations and others, based on input signals from the above various sensors. For example, the PCM 70 is operable to control the fuel injector 20, the throttle valve 36, the EGR valve 50b, and the fuel pressure regulator. In this embodiment, the PCM 70 is configured to mainly control each of the fuel injectors 20 to perform control concerning fuel to be supplied to a respective one of the cylinders 2 (fuel injection control). The PCM 70 functions as "controller" set forth in the appended claims.

Here, with reference to FIG. 3, a basic concept of the fuel injection control to be performed by the PCM 70 will be described. FIG. 3 is a time chart showing a typical fuel injection pattern used in this embodiment.

In this embodiment, as depicted in FIG. 3, the PCM 70 is configured to control the fuel injector 20 to, during one combustion cycle, perform multiple fuel injections (multistage injection) to induce multiple combustions in each of the cylinders. Specifically, the PCM 70 is operable to control the fuel injector 20 to execute a pilot injection at a relatively early timing, and then execute a pre-injection at a timing relatively close to a timing of a main injection. In this injection pattern, through the execution of the pilot injection as an initial injection, it is possible to improve the quality of premixing fuel and air to improve an air utilization rate. Further, through the execution of this pilot injection and the pre-injection as a second injection, it is possible to induce a pre-combustion as a combustion having a small heat release amount, immediately before fuel injected by the main injection (main-injected fuel) is combusted, i.e., immediately before a main-combustion is induced, thereby forming a state in which the main-injected fuel is easily combusted. The PCM 70 is also operable to control the fuel injector 20 to execute an after-injection for injecting fuel into the combustion chamber 9 in an injection amount less than that of the main injection at a timing after the main injection, so as to combust soot produced in the combustion chamber 9.

Although FIG. 3 shows an example where each of the pilot injection, the pre-injection, the main injection and the after-injection is executed once, at least one of these injections (typically, the pre-injection) may be executed two or more times, and at least one of these injections (typically, the after-injection) needs not be executed.

Further, the PCM 70 is configured to use a fuel injection pattern according to the engine operating state. Specifically, the PCM 70 is operable, according to the engine load and the engine speed, to change the timing and time period of execution of each of the pilot injection, the pre-injection, the main injection and the after-injection, the number of times of execution of each of the pilot injection, the pre-injection, the main injection and the after-injection, and the execution or non-execution of each of the pilot injection, the pre-injection, the main injection and the after-injection.

Typically, with regard to the main injection, the PCM 70 is operable, based on a required power output according to a relative position of an accelerator pedal manipulated by a driver (accelerator position), and the engine operating state, to set a basic injection timing of the main injection (hereinafter referred to as "reference main injection timing"). Further, in order to induce a combustion having a relatively small heat release amount, by the pre-injection immediately before combustion of the main-injected fuel, thereby forming a state in which the main-injected fuel is easily combusted, the PCM 70 is operable to set the injection timing of the pre-injection to a timing of allowing fuel spray injected by the pre-injection (pre-injected fuel spray) to be received within the cavity provided on the crown surface of the piston 4 and to form a relatively rich air-fuel mixture in the cavity. Furthermore, the PCM 70 is operable to set the injection timing of the after-injection to a timing of allowing soot produced in the combustion chamber 9 due to the fuel injections prior to the after-injection to be adequately combusted by the after-injection.

### < Basic Concept of Control >

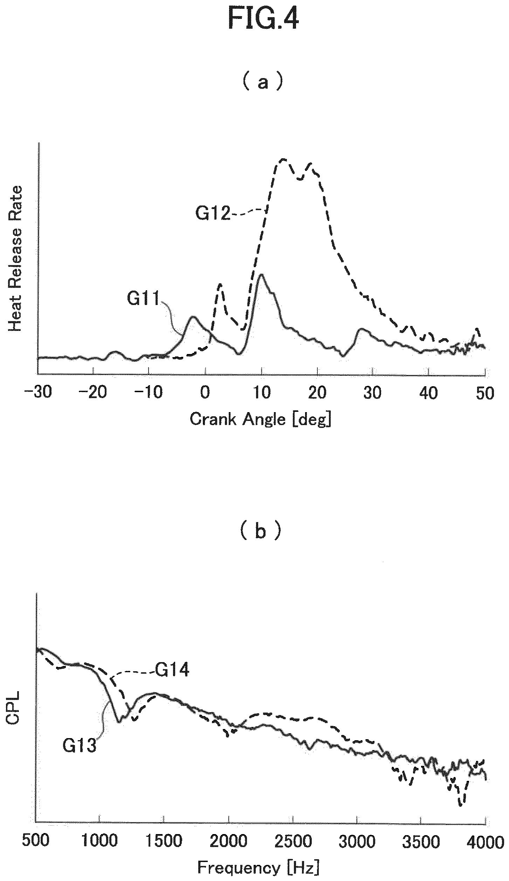

Next, with reference to FIGS. 4 to 21, the basic concept of the control in this embodiment will be more specifically described.

As mentioned above, the frequency control as disclosed in the Patent Document 2 can reduce a knocking sound corresponding to each of a plurality of frequency bands such as resonant frequency components, but is insufficient to lower the level of a combustion sound in whole. Particularly, in a low engine load range of the diesel engine, the level of the combustion sound becomes larger as comparted with mechanical noise, traveling noise, or intake/exhaust noise, so that the knocking sound becomes prominent. For this reason, in the low engine load range, it is necessary to reduce the level of the combustion sound itself for the purpose of reducing the knocking sound. However, the frequency control is sufficient to reduce the level of the combustion sound itself. As means to lower the level of the combustion sound, it is conceivable to lower the maximum combustion pressure. However, this technique causes an increase in smoke amount (amount of production of soot) and deterioration in fuel consumption. That is, basically, the knocking sound and the smoke amount have a conflicting relation, and the knocking sound and the fuel consumption have a conflicting relation.

In view of this, in order to explore an ideal combustion capable of adequately reducing the knocking sound without deteriorating the smoke amount and the fuel consumption, the present inventors made efforts to find the ideal combustion from the standpoint of the CPL. Firstly, the present inventors attempted to find a clue to the reduction of the CPL, with a focus on a scene where the knocking sound is small and a scene where the knocking sound is large, in actual traveling scenes. As a result, it was found that, in a full engine load range having largest combustion energy (torque), the knocking sound is small, whereas, in low and medium engine load ranges on a low engine speed side, the knocking sound is large (i.e., the knocking sound is increased to an audible level). In the following description, the expression "partial engine load range" to be compared with the full engine load range will be used as a term which means the low and medium engine load ranges on the low engine speed side, as appropriate. Typically, an engine operating state in which the engine speed is about 1500 rpm, and the engine load is about 500 kPa belongs to the partial engine load range.

FIG. 4 shows graphs indicating a heat release rate and a CPL, obtained in two actual traveling scenes in which there is a large difference in knocking sound therebetween. In chart (a) of FIG. 4, the horizontal axis and the vertical axis represent, respectively, crank angle and heat release rate, and, in chart (b) of FIG. 4, the horizontal axis and the vertical axis represent, respectively, frequency and CPL. Specifically, graphs G11 and D13 show, respectively, the heat release rate and the CPL each obtained in a traveling scene in the partial engine load range, and graphs G12 and D14 show, respectively, the heat release rate and the CPL each obtained in a traveling scene in the full engine load range. As can be understood from charts (a) and (b) of FIG. 4, focusing on a difference in combustion between the partial engine load range and the full engine load range, high frequency energy is relatively low in the full engine load range, even though released heat amount (torque) is relatively large. Therefore, the present inventors attempted to find an ideal combustion waveform from a combustion waveform in the full engine load range having a relatively small knocking sound, by utilizing a simulation.

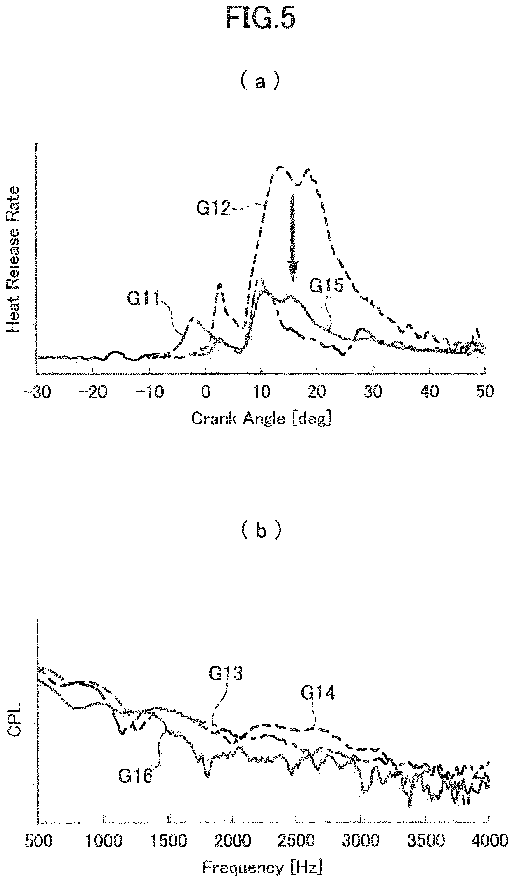

FIG. 5 shows simulation results obtained when combustion attained in the full engine load range is reproduced in the partial engine load range. In chart (a) of FIG. 5, the horizontal axis and the vertical axis represent, respectively, the crank angle and the heat release rate, and, in chart (b) of FIG. 5, the horizontal axis and the vertical axis represent, respectively, the frequency and the CPL. Specifically, graphs G11 to G14 are the same as those in charts (a) and (b) of FIG. 4. Further, a graph G15 shows a combustion waveform obtained by deforming a heat release rate curve in the full engine load range (graph G12) to a similar curve in conformity with a heat release rate curve in the partial engine load range, and a graph G16 shows a CPL curve as measured when using the deformed combustion waveform of the graph G15. From the graph G16, it was found that the CPL is significantly reduced by transferring the similar curve of the combustion waveform in the full engine load range to the partial engine load range. Therefore, the present inventors decided to study to what extent the CPL can be reduced, through a further simulation.

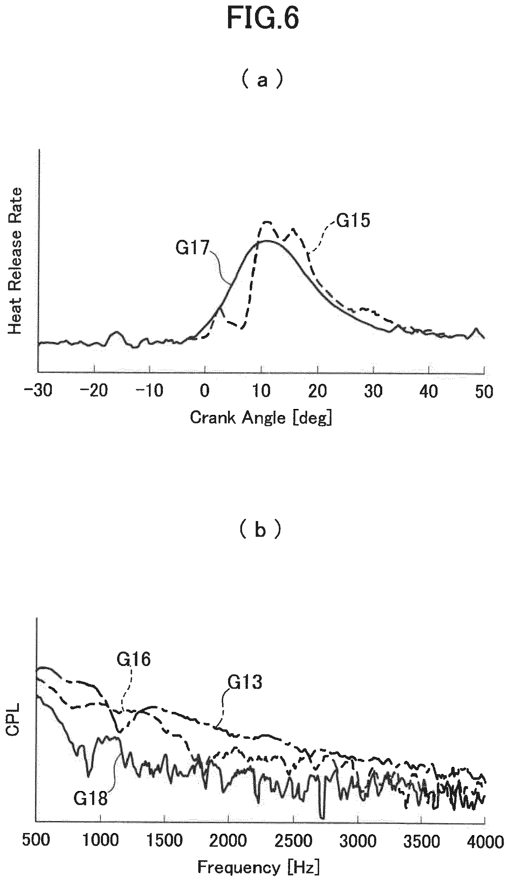

FIG. 6 shows simulation results in each of which a combustion waveform obtained by reproducing combustion attained in the full engine load range, in the partial engine load range, is compared with a combustion waveform having the minimum gradient of the heat release rate. In chart (a) of FIG. 6, the horizontal axis and the vertical axis represent, respectively, the crank angle and the heat release rate, and, in chart (b) of FIG. 6, the horizontal axis and the vertical axis represent, respectively, the frequency and the CPL. Specifically, graphs G13, G15 and G16 are the same as those in charts (a) and (b) of FIG. 5, and a graph G17 shows a combustion waveform obtained by minimizing the gradient of the heat release rate under the same torque condition as that for a combustion waveform obtained by reproducing the combustion waveform attained in the fill engine load range, in the partial engine load range (graph G15). This graph G17 is a combustion waveform obtained by: in a rising phase of the heat release rate, increasing the heat release amount and moderating the gradient of the heat generation rate, as compared with the graph G15; and, in a peak phase of the heat release rate, reducing the heat release amount, as compared with the graph G15. Further, a graph G18 shows a CPL curve as measured when using the combustion waveform of the graph G17. Comparing this graph G18 with the graph G16 showing the CPL curve as measured when using the combustion waveform obtained by reproducing combustion attained in the full engine load range, in the partial engine load range, it is deemed that there is a possibility of reducing the CPL at a frequency of 1500 Hz or less. Therefore, the present inventors decided to conduct a study of a further reduction in the CPL at a frequency of 1500 Hz or les, through a simulation.

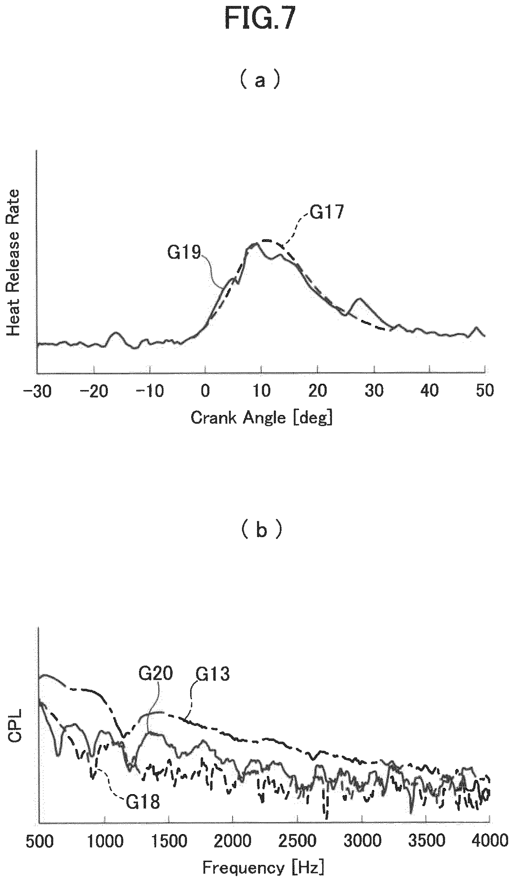

FIG. 7 shows simulation results of a derived ideal combustion waveform. In chart (a) of FIG. 7, the horizontal axis and the vertical axis represent, respectively, the crank angle and the heat release rate, and, in chart (b) of FIG. 7, the horizontal axis and the vertical axis represent, respectively, the frequency and the CPL. Specifically, graphs G13, G17 and G18 are the same as those in charts (a) and (b) of FIG. 6, and a graph G19 shows a combustion waveform realizable in an actual engine, based on a combustion waveform having the minimum gradient of the heat release rate (graph G17) (this combustion waveform will hereinafter be referred to as "target combustion waveform"). As seen in the graph G19, this target combustion waveform can approximately trace the combustion waveform indicated by the graph G17 having the minimum gradient of the heat release rate, except for the period of combustion in accordance with the after-injection. Further, a graph G20 shows a CPL curve as measured when using the target combustion waveform of the graph G19. This curve shows that the CPL is adequately reduced at a frequency of 1500 Hz or less.

Through the aforementioned simulations, the target combustion waveform (ideal waveform) can be derived from a combustion waveform obtained by reproducing combustion attained in the full engine load range, in the partial engine road range. Then, the present inventors decided to research a combustion function to be controlled so as to realize the ideal combustion waveform. Specifically, it was decided to extract a combustion function to be improved, from the combustion attained in the full engine load range having a relatively small knocking sound. First of all, in order to clarify a reason why the knocking sound is relatively small in the combustion in the full engine load range, the present inventors compared the combustion in the partial engine load range with the combustion in the full engine load range. In particular, the present inventors checked an ignition delay period (a time period from start of fuel injection to start of combustion) in each of the combustion in the partial engine load range and the combustion in the full engine load range.

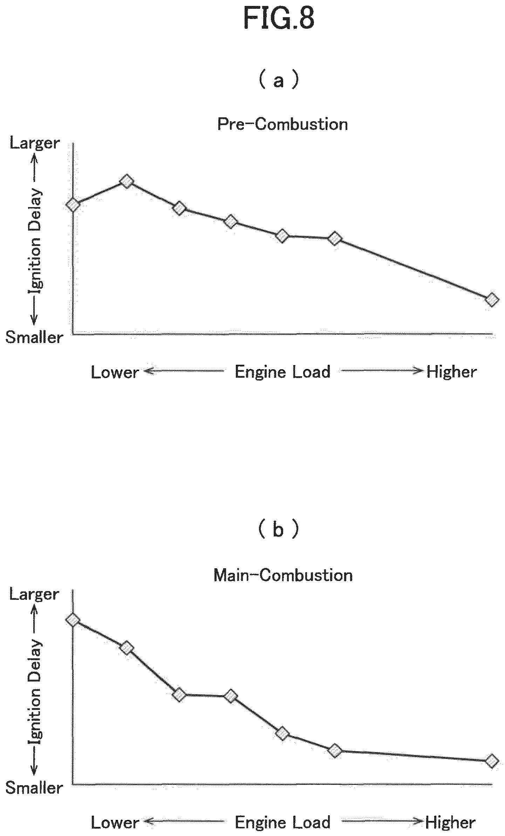

FIG. 8 shows a relationship between engine load and ignition delay period. In chart (a) of FIG. 8, the horizontal axis and the vertical axis represent, respectively, the engine load and an ignition delay period in the pre-combustion (particularly, a time period from the pilot injection to a peak of the pre-combustion), and, in chart (b) of FIG. 8, the horizontal axis and the vertical axis represent, respectively, the engine load and an ignition delay period in the main-combustion (particularly, a time period from the main injection to start of the main-combustion). As can be understood from charts (a) and (b) of FIG. 8, in both the pre-combustion and the maim combustion, the ignition delay period becomes shorter as the engine load becomes higher. Particularly in the full engine load range, the ignition delay period becomes minimum. Thus, the present inventors decided to look at a mechanism of a phenomenon that the knocking sound is reduced in the full engine load range in which the ignition delay period is relatively short.

Here, a mechanism of deterioration/improvement in the CPL depending on the ignition delay period will be considered. First, when the ignition delay period is relatively long, a time period from start of fuel injection through until fuel is ignited is relatively long, so that the amount of unburnt fuel (amount of pre-mixed gas) in the combustion chamber at a time of self-ignition becomes larger. Thus, when the ignition delay period is relatively long, a relatively large amount of fuel is combusted, so that a relatively large scale of combustion is considered to be induced, leading to deterioration in the CPL. On the other hand, when the ignition delay period is relatively short, the time period from start of fuel injection through until fuel is ignited is relatively short, so that the amount of unburnt fuel (amount of pre-mixed gas) in the combustion chamber at a time of self-ignition becomes smaller. Thus, when the ignition delay period is relatively short, a relatively small amount of fuel is combusted, so that a relatively small scale of combustion is considered to be induced, leading to improvement in the CPL.

Therefore, the present inventors contemplated adjusting the fuel injection pattern to shorten the ignition delay period, thereby improving the CPL. However, the knocking sound and the smoke amount are in a trade-off relationship, as mentioned above. Thus, by shortening the ignition delay period, the CPL is improved, but the smoke amount is increased. Although such a smoke amount should be taken into account, the present inventors decided to first conduct a study of a means necessary for control of the ignition delay period.

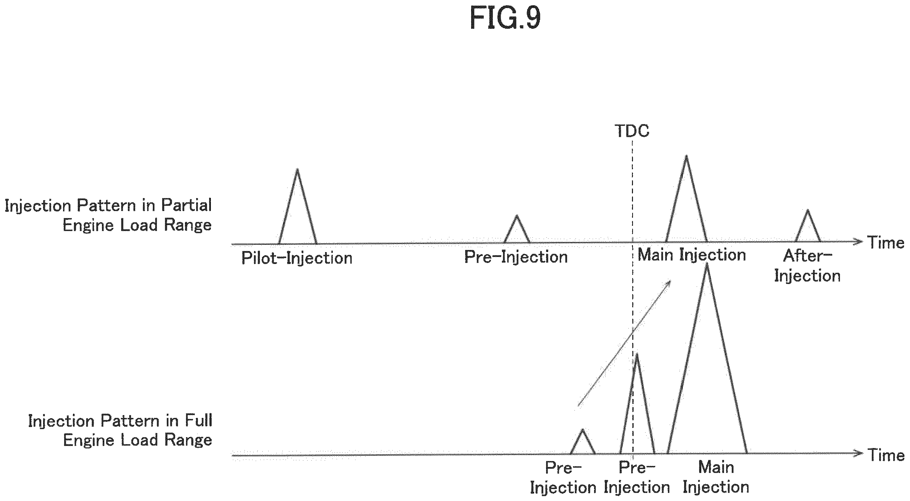

FIG. 9 schematically shows examples of fuel injection patterns, respectively, in the partial engine load range and in the full engine load range. In the examples shown in FIG. 9, in the partial engine load range, each of the pilot injection, the pre-injection, the main injection and after-injection is performed once. On the other hand, in the full engine load range, only the pre-injection and the main injection are performed, respectively, twice and once. More specifically, in the partial engine load range, the multiple fuel injections are performed at relatively long time intervals. This is intended to ensure a time period for utilizing a swirl flow in the combustion chamber and penetration of injected fuel to improve mixability between fuel and air in the combustion chamber. On the other hand, in the full engine load range, the multiple fuel injections are performed at relatively short time intervals. This is because, in the full engine load range, an environment capable of sufficiently ensuring the mixability between fuel and air in the combustion chamber is provided, and therefore there is no need to utilize the swirl flow and the penetration as in the partial engine load range. Particularly, in the full engine load range, the multiple fuel injections are executed closely, and the injection amounts of the multiple fuel injections are stepwisely increased (this injection operation will hereinafter be referred to as "slope injection", as appropriate).

As above, in the partial engine load range, the injection interval between successive two of the multiple fuel injections is relatively long, and thereby the ignition delay period is considered to become relatively long, whereas, in the full engine load range, the injection interval between successive two of the multiple fuel injections is relatively short, and thereby the ignition delay period is considered to become relatively short. Therefore, the present inventors first contemplated increasing, in the partial engine load range, the number of times of injection so as to reduce the injection interval to shorten the ignition delay period.

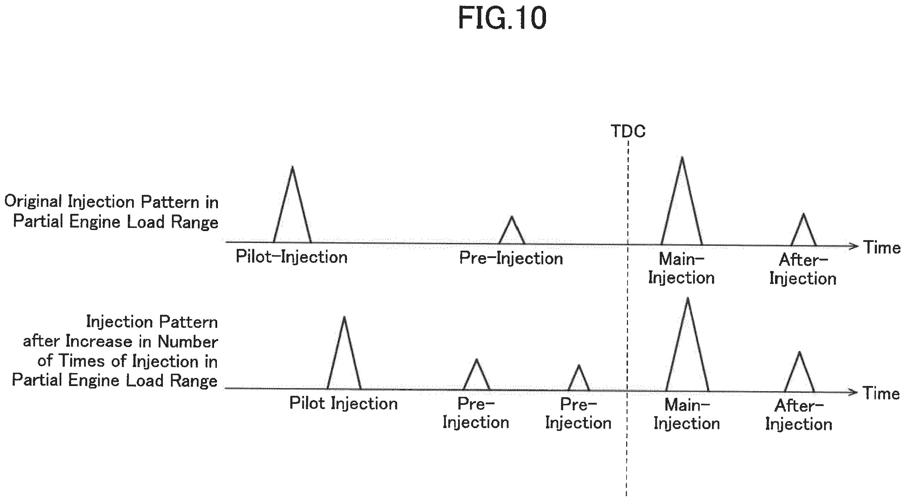

FIG. 10 schematically shows examples of fuel injection patterns in which the number of times of injection is increased in the partial engine load range. As shown in the lower chart of FIG. 10, in the partial engine load range, one pre-injection is added, i.e., the pre-injection is performed twice.

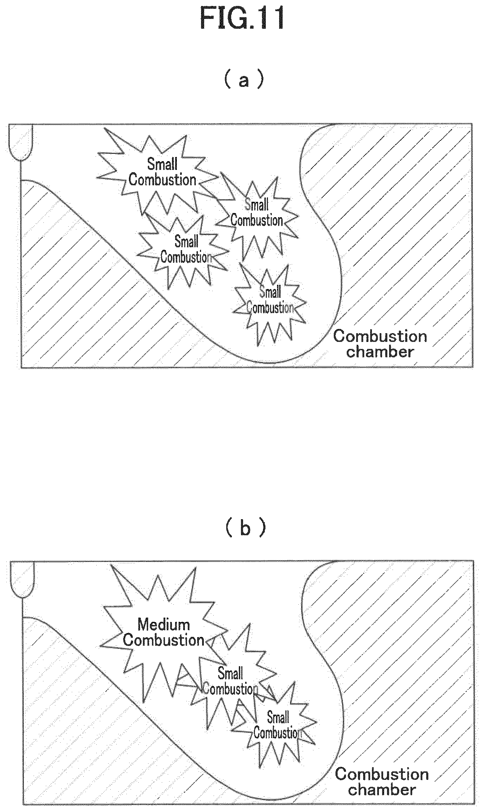

FIG. 11 shows conceptual diagrams for explaining combustion produced when the number of times of injection is increased in the partial engine load range. Chart (a) of FIG. 11 conceptually shows combustion produced in the combustion chamber when the number of times of injection is increased in the partial engine load range, and chart (b) of FIG. 11 conceptually shows combustion produced in the combustion chamber in the full engine load range. In the full engine load range, the injection amounts of the multiple fuel injections are stepwisely increased, so that combustion (energy) will be continuously increased in the combustion chamber as shown in chart (b) of FIG. 11. On the other hand, when the number of times of injection is increased in the partial engine load range, self-ignition will be sequentially performed to produce small combustions (energies) in the combustion chamber dispersedly, as shown in chart (a) of FIG. 11. That is, even in the partial engine load range, combustion similar to that in the full engine load range can be formed in the combustion chamber. This makes it possible to shorten the ignition delay period in the partial engine load range.

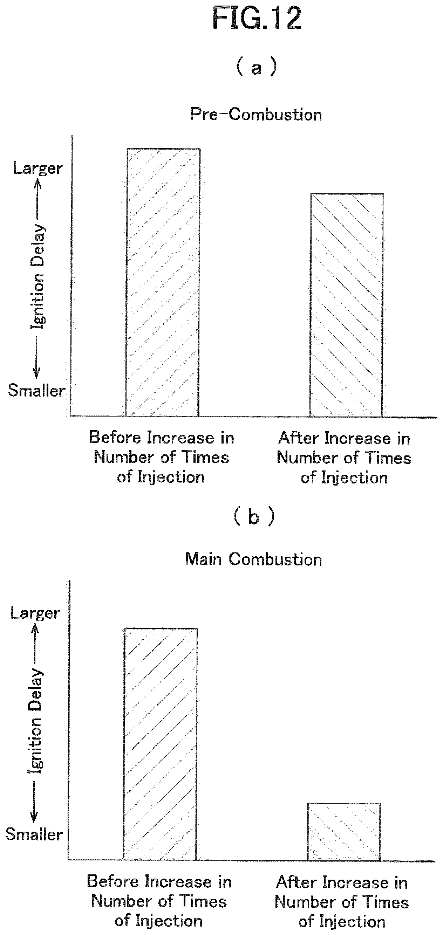

FIG. 12 shows the ignition delay period occurring when the number of times of injection is increased in the partial engine load range. Specifically, chart (a) of FIG. 12 shows the ignition delay periods before and after an increase in the number of times of injection in the pre-combustion, and chart (b) of FIG. 12 shows the ignition delay periods before and after the increase in the number of times of injection in the main combustion. As can be understood from charts (a) and (b) of FIG. 12, when the number of times of injection is increased in the partial engine load range, the ignition delay period is shorten in both the pre-combustion and the main combustion (particularly in the main combustion).

Thus, with a view to shortening the ignition delay period in the partial engine load range, the present inventors decided to conduct desk study on calibration of a fuel injection pattern obtainable by combining the technique of increasing the number of times of injection and the slope injection. In this case, the number of times of injection to be applied to the fuel injection pattern was set to 7 at a maximum. As one example, a fuel injection pattern consisting of three pilot injections, two pre-injections, one main injection, and one after-injection was used. Further, respective injection amounts of these multiple fuel injections were changed as appropriate.

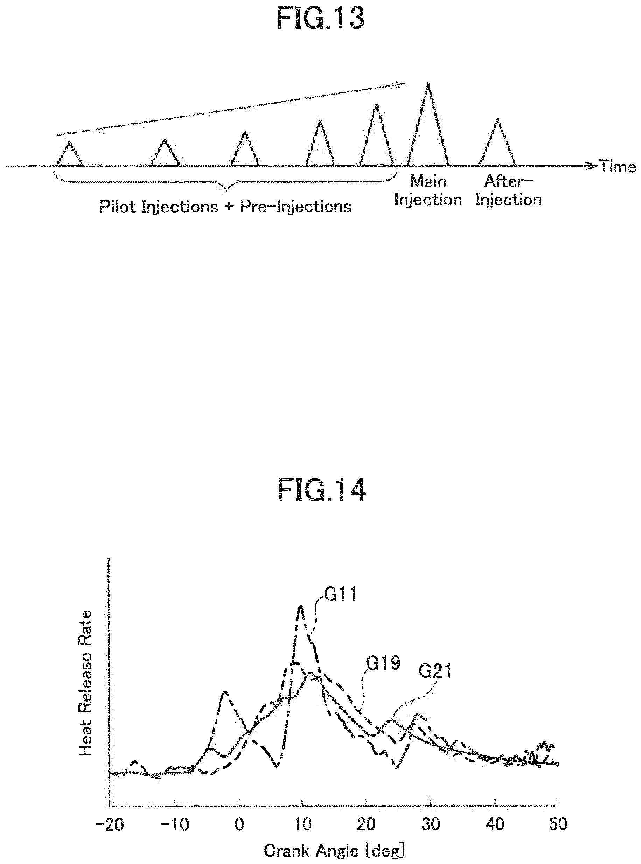

FIG. 13 schematically shows an example of a fuel injection pattern used in the partial engine load range. Specifically, FIG. 13 shows an example a fuel injection pattern in which, in order to shorten the ignition delay period in the partial engine load range, seven fuel injections are performed, wherein the injection amounts thereof are stepwisely increased (i.e., the slope injection is performed). In the following description, the fuel injection pattern as shown in FIG. 13 will be referred to as "7-stage reference injection pattern", as appropriate.

FIG, 14 shows a combustion waveform obtained when using the 7-stage reference injection pattern. In FIG. 14, the horizontal axis represents the crank angle, and the vertical axis represents the heat release rate. Specifically, graphs G11 and G19 are the same as those in chart (a) of FIG. 4 and chart (a) of FIG. 7. That is, the graph G11 shows a fuel injection pattern in accordance with an original fuel injection pattern in the partial engine load range, to which the technique of increasing the number of times of injection and the slope injection are not applied (this original fuel injection pattern will hereinafter be referred to as "reference injection pattern", as appropriate). The graph G19 shows the target combustion waveform based on the combustion waveform having the minimum gradient of the heat release rate (see the graph G17 in chart (a) of FIG. 6). Further, a graph G21 shows a combustion waveform obtained when using the 7-stage reference injection pattern. As can be understood from the graph G21, the target combustion waveform can be approximately reproduced when using the 7-stage reference injection pattern.

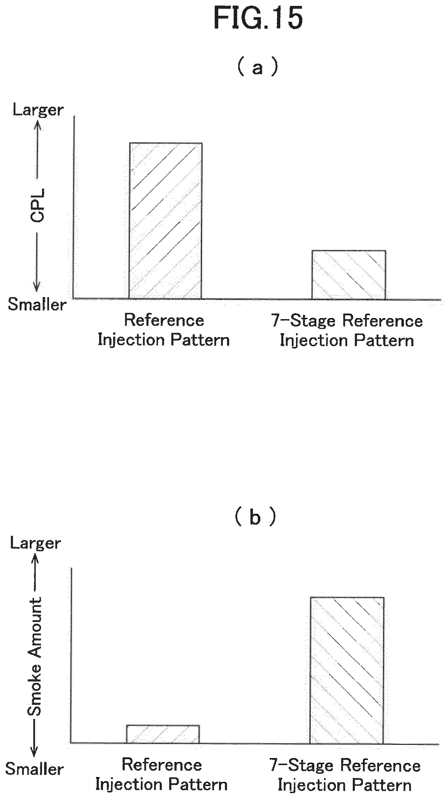

FIG. 15 shows graphs indicating the CPL and the smoke amount as measured when using the 7-stage reference injection pattern. Specifically, chart (a) of FIG. 15 shows respective values of the CPL as measured when using the reference injection pattern and the 7-stage reference injection pattern. As can be understood from chart (a) of FIG. 15, the CPL is significantly improved when using the 7-stage reference injection pattern, as compared with when using the reference injection pattern. On the other hand, chart (b) of FIG. 15 shows respective values of the smoke amount as measured when using the reference injection pattern and the 7-stage reference injection pattern. As can be understood from chart (b) of FIG. 15, the smoke amount is deteriorated when using the 7-stage reference injection pattern, as compared with when using the reference injection pattern. Therefore, the present inventors decided to conduct a study of an improvement in the smoke amount by means of the 7-stage reference injection pattern,

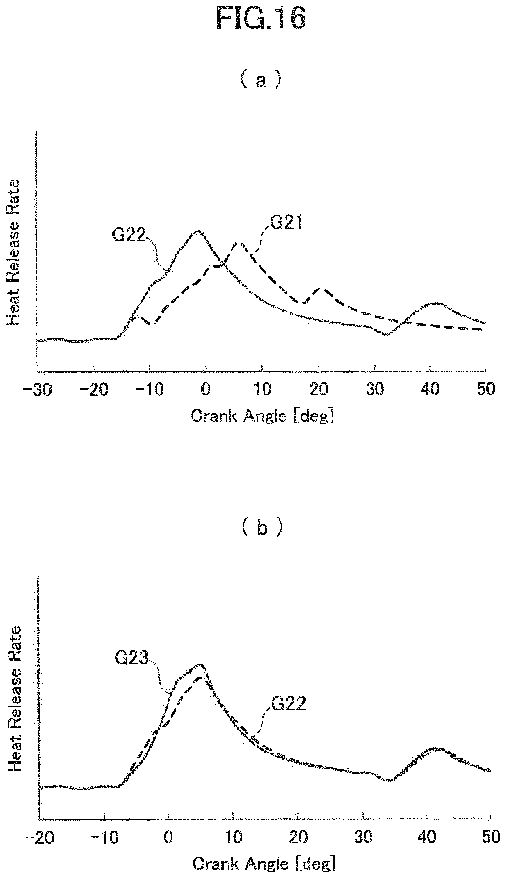

FIG. 16 shows graphs indicating combustion waveforms obtained when using first and second 7-stage injection patterns obtained by improving the 7-stage reference injection pattern. In charts (a) and (b) of FIG. 16, the horizontal axis represents the crank angle, and the vertical axis represents the heat release rate.

Specifically, in chart (a) of FIG. 16, a graph G21 is the same as that in FIG. 14, i.e., shows a combustion waveform obtained when using the 7-stage reference injection pattern, and a graph G22 shows a combustion waveform obtained when using the first 7-stage improved injection pattern. This first 7-stage improved injection pattern is a fuel injection pattern in which, as compared with the 7-stage reference injection pattern: a depressed area (valley) in a rising section of the combustion waveform is eliminated to smoothen the rising section of the combustion waveform (stabilize the gradient of the rising section); the peak of the combustion waveform is advanced; and the heat release amount in the rising section of the combustion waveform corresponding to the main combustion is reduced. It is intended to reduce the smoke amount based on such a first 7-stage improved injection pattern. Here, in the depressed area (valley) in the rising section, a rising gradient during recovery from the depressed area becomes steep, so that it becomes a factor for a large knocking sound, particularly, causing an impact noise including a large amount of high frequency component.

Further, the first 7-stage improved injection pattern, with a view to further reduce the smoke amount, the after-injection is retarded, as compared with the 7-stage reference injection pattern, to extend a mixing period between fuel and air. As mentioned above, in the first 7-stage improved injection pattern, the peak of the combustion waveform is advanced. Thus is intended to suppress a torque drop (deterioration in fuel consumption) due to the retardation of the after-injection.

On the other hand, in chart (b) of FIG. 16, a graph G22 is the same as that in chart (a) of FIG. 16, i.e., shows a combustion waveform obtained when using the first 7-stage improved injection pattern, and a graph G23 shows a combustion waveform obtained when using the second 7-stage improved injection pattern. Although the second 7-stage improved injection pattern is fundamentally the same as the first 7-stage improved injection pattern, it is different from the first 7-stage improved injection pattern, in that the injection pressure of fuel is raised. By raising the injection pressure of fuel in this manner, it is intended to improve homogeneity of fuel to reduce the smoke amount.

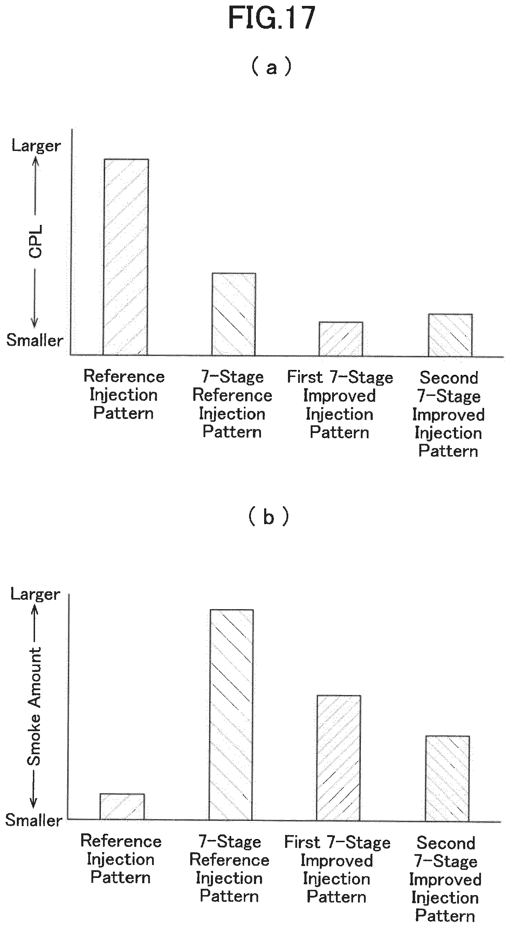

FIG. 17 shows graphs indicating the CPL and the smoke amount as measured when using the first and second 7-stage improved injection patterns. Specifically, chart (a) of FIG. 17 shows respective values of the CPL as measured when using the reference injection pattern, the 7-stage reference injection pattern, the first 7-stage improved injection pattern and the second 7-stage improved injection pattern. As can be understood from chart (a) of FIG. 17, the CPL is further improved when using the first and second 7-stage improved injection patterns than when using the 7-stage reference injection pattern. On the other hand, chart (b) of FIG. 17 shows respective values of the smoke amount as measured when using the reference injection pattern, the 7-stage reference injection pattern, the first 7-stage improved injection pattern and the second 7-stage improved injection pattern. As can be understood from chart (b) of FIG. 17, when using the first and second 7-stage improved injection patterns, the smoke amount is improved, as compared with when using the 7-stage reference injection pattern, but still deteriorated, as compared with when using the reference injection pattern. Thus, the present inventors considered that it is difficult to reduce the smoke amount any more by improving the first and second 7-stage improved injection patterns in terms of the after-injection and the injection pressure. Therefore, the present inventors decided to clarify a factor for determining the CPL and the smoke amount in the multistage injection.

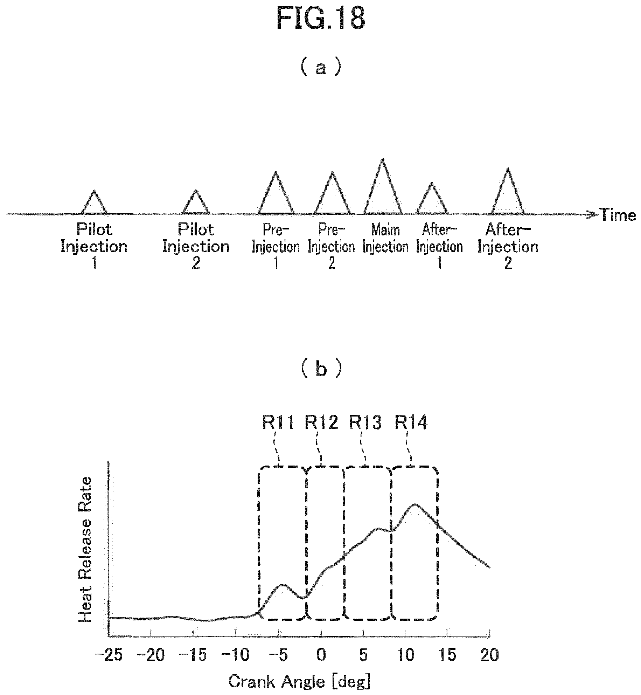

FIG. 18 shows explanatory diagrams of a multistage injection sensitivity adjustment method to be performed to clarify mechanisms of the CPL and the smoke amount. Chart (a) of FIG. 18 shows an example of a fuel injection pattern used for clarifying the mechanisms. This fuel injection pattern is composed of a 7-stage injection consisting of a pilot injection 1, a pilot injection 2, a pre-injection 1, a pre-injection 2, a maim injection, an after-injection 1, and an after-injection 2. Chart (b) of FIG. 18 shows an example of a combustion waveform obtained when using the fuel injection pattern in chart (a) of FIG. 18. In this combustion waveform, a region R11 corresponds to combustion induced by the pilot injection 1 and the pilot injection 2, and a region R12 corresponds to combustion induced by the pre-injection 1. Further, a region R13 corresponds to combustion induced by the pre-injection 2, and a region R14 corresponds to combustion induced by the main injection and the after-injection 1.

Here, the present inventors attempted to check heat release and smoke sensitivities to the injection amount, with regard to each fuel injection in the multistage injection, to clarify a function of each fuel injection in the multistage injection. In this checking, the heat release amount was used as an alternative to the knocking sound by replacing the gradient of the heat release rate which is highly correlated with the CPL, with a change in magnitude of the heat release amount per unit injection amount.

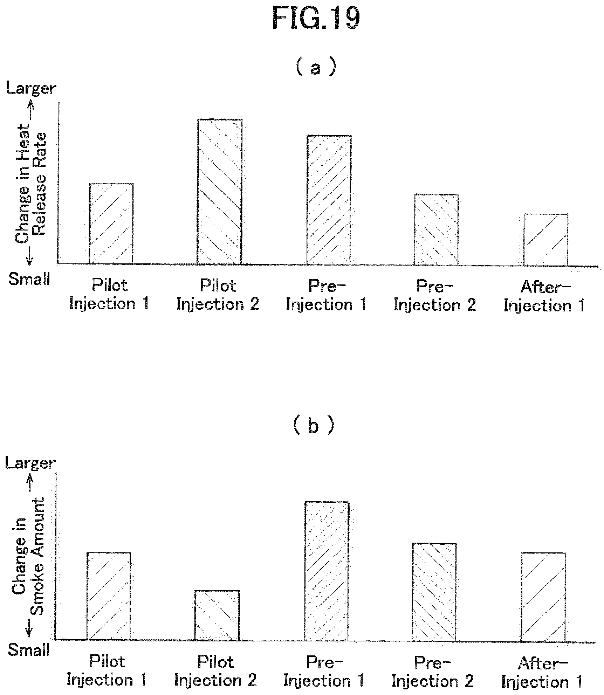

FIG. 19 shows sensitivity check results of each fuel injection of the multistage injection in the partial engine load range. Specifically, chart (a) of FIG. 19 shows a change in magnitude of the heat release amount per unit fuel injection amount, with regard to each of the pilot injection 1, the pilot injection 2, the pre-injection 1, the pre-injection 2 and the after-injection 1. This change in magnitude of the heat release amount is uniquely indicative of the knocking sound (CPL). As can be understood from chart (a) of FIG. 19, with regard to the pilot injection 2 and the pre-injection 1, the change in magnitude of the heat release amount is relatively large. That is, the pilot injection 2 and the pre-injection 1 have a larger influence on the knocking sound (CPL), as compared with the remaining fuel injections. On the other hand, chart (b) of FIG. 19 shows a change in the smoke amount per unit fuel injection amount, with regard to each of the pilot injection 1, the pilot injection 2, the pre-injection 1, the pre-injection 2 and the after-injection 1. As can be understood from chart (b) of FIG. 19, with regard to the pre-injection 1, the pre-injection 2 and the after-injection 1, the change in the smoke amount is relatively large. That is, the pre-injection 1, the pre-injection 2 and the after-injection 1 have a larger influence on the smoke amount, as compared with the remaining fuel injections.

From the check results shown in charts (a) and (b) of FIG. 19, the mechanisms of the CPL and the smoke amount was found that the magnitude of the CPL depends on an early-stage fuel injection, and the magnitude of the smoke amount depends on a late-stage fuel injection. Thus, based on this mechanisms, the present inventors decided to perform calibration of the fuel injection pattern such that the early-stage fuel injection is adjusted to reduce the CPL, and the late-stage fuel injection is adjusted to reduce the smoke amount.

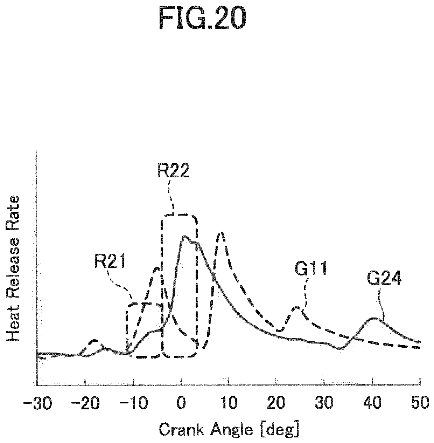

FIG. 20 shows a combustion wave in accordance with a fuel injection pattern obtained by the calibration based on the above mechanisms of the CPL and the smoke amount. In FIG.20, the horizontal axis represents the crank angle, and the vertical axis represents the heat release rate. Specifically, a graph G11 is the same as that in chart (a) of FIG. 4, i.e., shows a combustion waveform in accordance with the reference injection pattern, and a graph G24 shows a combustion waveform in accordance with a fuel injection pattern in the partial engine load range, obtained by the calibration based on the above mechanisms of the CPL and the smoke amount. The latter fuel injection pattern is composed of a 6-stage fuel injection (this fuel injection pattern will hereinafter be referred to as "6-stage improved injection pattern"). This 6-stage improved injection pattern is a fuel injection pattern obtained by eliminating the earliest fuel injection in the above 7-stage injection pattern (each of the 7-stage reference injection pattern and the first and second 7-stage improved injection patterns).

Specifically, in the 6-stage improved injection pattern, the pre-combustion is produced to be included in the main combustion to eliminate a depressed area (valley) in a rising section of the combustion waveform, and moderate the gradient of the rising section of the combustion waveform (see a region R21). This is intended to reduce the CPL. Particularly, it is intended to reduce a high frequency component of the knocking sound. Further, in the 6-stage improved injection pattern, the multistage injection is controlled such that a combustion waveform corresponding to the main combustion is formed in a trapezoidal shape (see a region R22), thereby reducing the smoke amount. Further, in the 6-stage improved injection pattern, the after-injection is retarded to further reduce the smoke amount. In this case, in order to suppress a torque drop (deterioration in fuel consumption) due to the retardation of the after-injection, the main combustion is advanced.

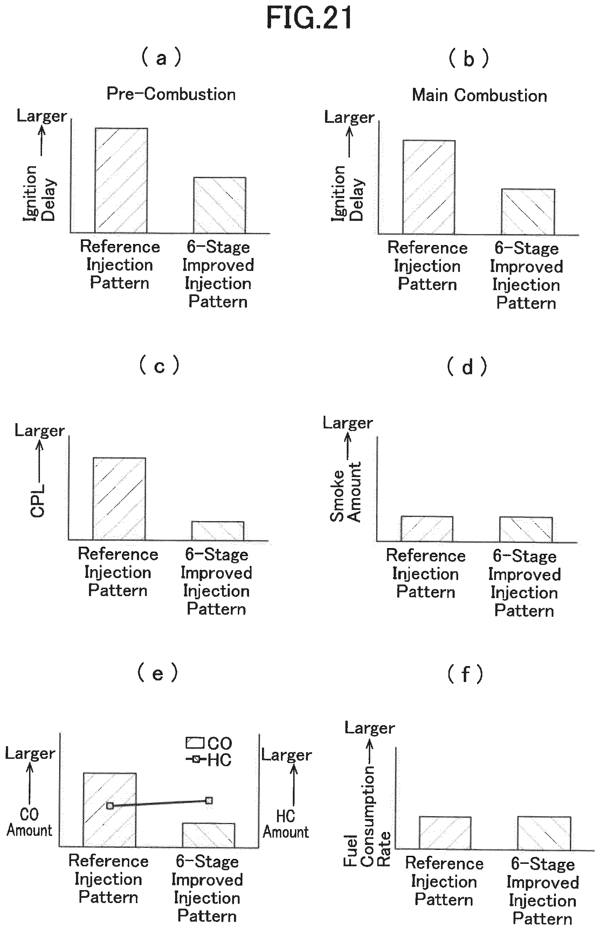

FIG. 21 shows graphs indicating various results obtained when the 6-stage improved injection pattern is used in the partial engine load range. Firstly, chart (a) of FIG. 21 shows respective values of the ignition delay period in the pre-combustion, as measured when using the reference injection pattern and the 6-stage improved injection pattern, and chart (b) of FIG. 21 shows respective values of the ignition delay period in the main combustion, as measured when using the reference injection pattern and the 6-stage improved injection pattern. As can be understood from charts (a) and (b) of FIG. 21, in both the pre-combustion and the main combustion, the ignition delay period becomes shorter when using the 6-stage improved injection pattern than when using the reference injection pattern.

Secondly, chart (c) of FIG. 21 shows respective values of the CPL as measured when using the reference injection pattern and the 6-stage improved injection pattern. As can be understood from chart (c) of FIG. 21, the CPL becomes smaller (e.g., by about 6 dB) when using the 6-stage improved injection pattern than when using the reference injection pattern.

Thirdly, chart (d) of FIG. 21 shows respective values of the smoke amount as measured when using the reference injection pattern and the 6-stage improved injection pattern. As can be understood from chart (d) of FIG. 21, the value of the smoke amount as measured when using the 6-stage improved injection pattern is approximately equal to that as measured when using the reference injection pattern. This means that, the smoke amount is improved when using the 6-stage improved injection pattern, as compared with when using the 7-stage reference injection pattern and the first and second 7-stage improved injection patterns.

Fourthly, chart (e) of FIG. 21 shows respective values of a CO amount and respective values of an HC amount, as measured when using the reference injection pattern and the 6-stage improved injection pattern. As can be understood from chart (e) of FIG. 21, the CO amount becomes smaller (e.g., by about 20%) when using the 6-stage improved injection pattern than when using the reference injection pattern, and the value of the HC amount as measured when using the 6-stage improved injection pattern is approximately equal to that as measured when using the reference injection pattern. The reason is considered to be that, when using the 6-stage improved injection pattern, the amount of fuel adhering onto a cylinder inner wall (unburnt fuel) is reduced.

Fifthly, chart (f) of FIG. 21 shows respective values of a fuel consumption rate as measured when using the reference injection pattern and the 6-stage improved injection pattern. As can be understood from chart (f) of FIG. 21, the value of the fuel consumption rate as measured when using the 6-stage improved injection pattern is approximately equal to that as measured when using the reference injection pattern.

Considering the above, in the 6-stage improved injection pattern, it is possible to significantly reduce the knocking sound in the partial engine load range, without causing deterioration in exhaust emissions such as smoke, and deterioration in fuel consumption.

### < Control in this Embodiment >

Next, control in this embodiment based on the basic concept described in the above Section will be specifically described.

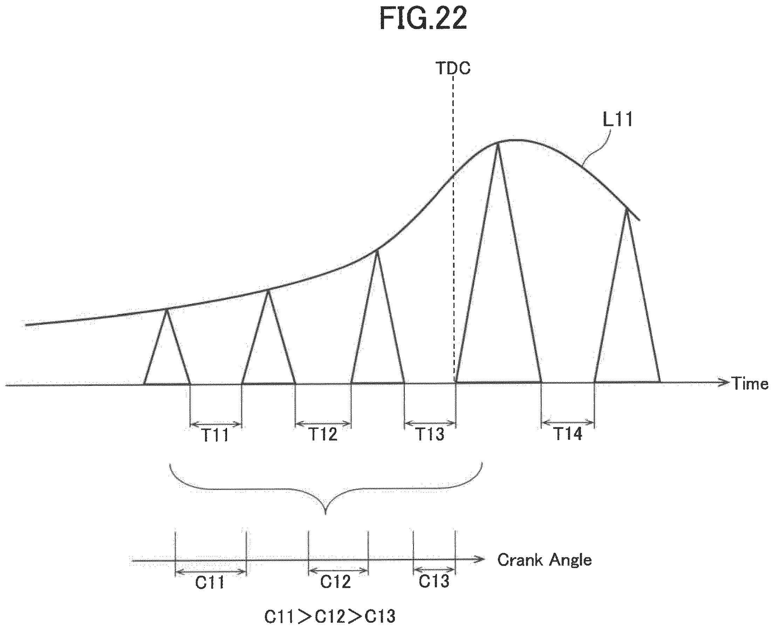

FIG. 22 is an explanatory diagram of control to be executed by the PCM 70 in this embodiment. FIG. 22 schematically shows multiple fuel injections, wherein time (which uniquely corresponds to the crank angle) is indicated in the horizontal direction, and the injection amount is indicated in the vertical direction. In this embodiment, the PCM is configured to control the fuel injector 20 to execute, in the aforementioned partial engine load range, one main injection, three pre-stage injections before the main injection, and one post-stage injection after the main injection. The pre-stage injections include at least a pre-injection (and may include or need not include the pilot injection), and the post-stage injection is the after-injection. In the following description, the three pre-stage injections will be referred to respectively as "1st stage injection", "2nd stage injection" and "3rd stage injection", and the main injection and the post-stage injection will be referred to respectively as "4th stage injection" and "5th injection".

Further, in this embodiment, the PCM 70 is configured to control the fuel injector 20 to increase respective injection amounts of the 1st stage injection, the 2nd stage injection and the 3rd stage injection, stepwisely toward the main injection, as indicated by the solid line L11 in FIG. 22, i.e., execute the slope injection. In this way, through the 1st stage injection, the 2nd stage injection and the 3rd stage injection, the heat release rate is continuously increased to preliminarily increase the in-cylinder heat amount and thus the in-cylinder pressure at the time of start of the main combustion. This makes it possible to moderate the gradient of the in-cylinder pressure until it reaches the maximum in-cylinder pressure caused by the main combustion, and adequately reduce a high frequency component of the knocking sound.

Further, in this embodiment, the PCM 70 is configured to control the fuel injector 20 to set injection intervals T11, T12, T13, T14 between successive ones of the 1st stage injection, the 2nd stage injection, the 3rd stage injection, the 4th stage injection and the 5th stage injection to be approximately constant. In particular, by setting the injection intervals T11, T12, T13 to be approximately constant, it is possible to continuously release heat toward the main injection, through the 1st stage injection, the 2nd stage injection and the 3rd stage injection.

Here, although the injection intervals T11, T12, T13 are approximately constant in terms of time as shown in an upper part of the diagram in FIG. 22, they are not constant in terms of crank angle, as shown in a lower part of the diagram in FIG. 22. Specifically, a crank angle period (width) corresponding to the injection interval becomes smaller in a direction toward a post-stage side (retard side). That is, the following relationships are satisfied: "a crank angle period C11 corresponding to the injection interval T11 > a crank angle period C12 corresponding to the injection interval T12 > a crank angle period C13 corresponding to the injection interval T13". This is because the rotational speed of the crankshaft 7 defined by the crank angle becomes lower in a direction approaching TDC.

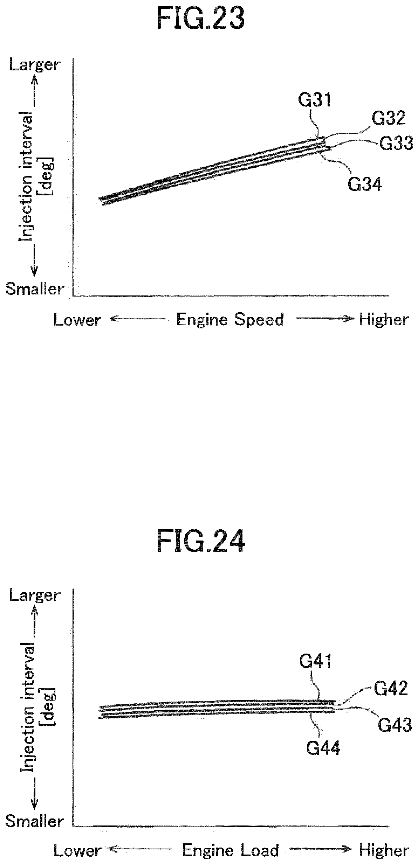

Further, in this embodiment, the PCM 70 is configured to control the fuel injector 20 to change the injection intervals according to the engine speed. Setting of the injection intervals according to the engine speed will be described with reference to FIG. 23. FIG. 23 shows a relationship between the engine speed and each of the injection intervals defined by a crank angle period. In FIG. 23, a graph G31 and a graph G32 indicate, respectively, an injection interval between the 1st injection and the 2nd injection and an injection interval between the 2nd injection and the 3rd injection, and a graph G33 and a graph G34 indicate, respectively, an injection interval between the 3rd injection and the 4th injection and an injection interval between the 4th injection and the 5th injection. It should be noted here that, in FIG. 23, the graphs G31 to G34 are illustrated in a manner slightly offset with respect to each other for the sake of explanation, but actually approximately overlap each other.

As shown in FIG. 23, the PCM 70 is configured to control the fuel injector 20 to gradually increase each of the injection intervals defined by the crank angle period, as an engine speed becomes higher. This is because, as the engine speed becomes higher, the rotational speed of the crankshaft 7 becomes higher, and a time period corresponding to one combustion cycle period becomes shorter. Therefore, by gradually increasing each of the injection intervals defined by the crank angle period as the engine speed becomes higher, it is possible to almost prevent the injection interval from changing in terms of time, according to the engine speed. In addition, the PCM 70 is configured to control the fuel injector 20 to change all the injection intervals between successive ones of the multiple fuel injections at approximately equal rates, according to the engine speed. In this way, a relationship among the injection intervals is maintained approximately constant, even when the engine speed changes.

Further, in this embodiment, the PCM 70 is configured to control the fuel injector 20 to prevent the injection intervals from changing according to the engine load. This will be described with reference to FIG. 24. FIG. 24 shows a relationship between the engine load and each of the injection intervals defined by the crank angle period. In FIG. 24, a graph G41 and a graph G42 indicate, respectively, an injection interval between the 1st injection and the 2nd injection and an injection interval between the 2nd injection and the 3rd injection, and a graph G43 and a graph G44 indicate, respectively, an injection interval between the 3rd injection and the 4th injection and an injection interval between the 4th injection and the 5th injection. It should be noted here that, in FIG. 24, the graphs G41 to G44 are illustrated in a manner slightly offset with respect to each other for the sake of explanation, but actually approximately overlap each other.

As shown in FIG. 24, the PCM 70 is configured to control the fuel injector 20 such that each of the injection intervals defined by the crank angle period is approximately constant, irrespective of the engine load. That is, the PCM 70 is operable to prevent the injection intervals from changing even when the engine load changes. This is because, when the engine load changes, only a required injection amount changes but the time period corresponding to one combustion cycle period does not change, differently from the case where the engine speed changes. However, when the required injection amount changes according to the engine load, a pulse width of a control signal to be applied to the fuel injector 20 is changed. Thus, it is preferable to change a timing of performing each of the fuel injections, according to the change in the pulse width.

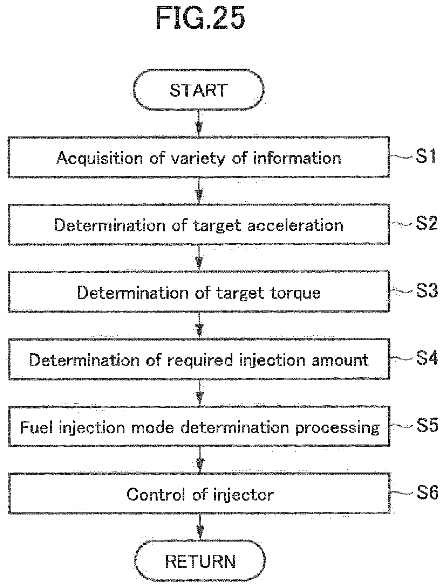

Next, with reference to FIG. 25, a flowchart of fuel injection control processing to be executed by the PCM 70 will be described. When an ignition switch of the vehicle is turned on to apply electric power to the PCM 70, the fuel injection control processing is activated and will be repeatedly executed.

Upon start of the fuel injection control processing, in step S1, the PCM 70 operates to acquire a variety of information regarding the operating state of the vehicle. Specifically, the PCM 70 operates to acquire information including detection signals output from the aforementioned various sensors SN1 to SN6, an accelerator position detected by an accelerator position sensor, a vehicle speed detected by a vehicle speed sensor, and a gear stage currently set in a transmission of the vehicle.

Subsequently, in step S2, the PCM 70 operates to set a target acceleration, based on the information acquired in the step S1. Specifically, the PCM 70 operates to select an acceleration characteristic map corresponding to a current vehicle speed and a current gear stage, among a plurality of acceleration characteristic maps (which are preliminarily created and stored in a memory or the like) defined with respect to various vehicle speeds and various gear stages, and determine a target acceleration corresponding to a current accelerator position by referring to the selected acceleration characteristic map.

Subsequently, in step S3, the PCM 70 operates to determine a target torque of the engine for realizing the target acceleration determined in the strep S2. Specifically, the PCM 70 operates to determine a target torque within a torque range outputtable from the engine, based on current vehicle speed, gear stage, road grade, road surface µ, etc.

Subsequently, in step S4, the PCM 70 operates to set a required injection amount of fuel (mainly, an injection amount of the main injection) to be injected from the fuel injector 20 to obtain the target torque, based on the target torque determined in the step S3, and the engine speed calculated based on an output signal from the crank angle sensor SN1.

Subsequently, in step S5, the PCM 70 operates to determine a fuel injection mode (which includes the injection amount and injection timing of fuel, i.e., a fuel injection pattern). Particularly, in this embodiment, the PCM 70 operates to, when the engine operating state is in the partial engine load range, employ a fuel injection mode consisting of 1st stage to 5th stage injections, wherein the fuel injection mode is configured such that injection amounts of the 1st stage to 3rd stage injections are stepwisely increased toward the main injection, and injection intervals between successive ones of the 1st stage to 5th stage injections are approximately constant (see FIG. 22). Further, the PCM 70 operates to determine each of the injection intervals between successive ones of the multiple fuel injections, according to the engine speed. In particular, the PCM 70 operates to refer a map defining a relationship between the engine speed and the injection interval defined by the crank angle period, as shown in FIG. 23, to determine a value of the injection interval corresponding to a current value of the engine speed. In this case, the PCM 70 operates to change all the injection intervals between successive ones of the multiple fuel injections at approximately equal rates, according to the engine speed. On the other hand, the PCM 70 operates to cause each of the injection intervals defined by the crank angle period to be approximately constant, irrespective of the engine load (see FIG. 24).

Subsequently, in step S6, the PCM 70 operates to control the fuel injector 20, based on the required injection amount determined in the step S4, and the fuel injection mode determined in the step S5. After completion of the step S6, the PCM 70 operates to complete one cycle of fuel injection control processing.

### < Functions/Effects >

Next, functions/effects of the fuel injection control system according to the above embodiment will be described.

In the above embodiment, the PCM 70 is configured to, when performing multiple fuel injections comprising at least two pre-stage injections and a main injection, control the fuel injector 20 to set the injection interval between successive two of the fuel injections depending on the crank angle period. Specifically, the PCM 70 is configured to control the fuel injector 20 to gradually reduce each of the injection intervals defined by the crank angle period, in the direction toward the post-stage side (retard side). Typically, the PCM 70 is configured to control the fuel injector 20 to gradually reduce each of the injection intervals between successive ones of the multiple fuel injections, defined by the crank angle period, in the direction toward the post-stage side (retard side) so as to allow the injection intervals to be approximately constant in terms of time.

In this way, the pre-stage injections are performed at adequate injection intervals (at equal time intervals), so that heat can be continuously released toward the main injection, thereby raising an in-cylinder heat amount and thus an in-cylinder pressure at the time of start of a main combustion. Thus, it is possible to moderate the gradient of the in-cylinder pressure until it reaches the maximum in-cylinder pressure caused by the main combustion, thereby adequately reducing a high frequency component of a knocking sound. Therefore, the fuel injection control system according to the above embodiment can adequately reduce a knocking sound without causing deterioration in exhaust emissions such as smoke and deterioration in fuel consumption.

In the above embodiment, the PCM 70 is configured to control the fuel injector 20 to gradually increase each of the injection intervals defined by the crank angle period, as the engine speed becomes higher, so that, even when a time period corresponding to a combustion cycle period changes according to the engine speed, the pre-stage injections can be performed at adequate injection intervals.

In the above embodiment, the PCM 70 is configured to control the fuel injector 20 to change all the injection intervals between successive ones of the multiple fuel injections at approximately equal rates according to the engine speed, so that it is possible to maintain a relationship among the injection intervals approximately constant even when the engine speed changes.

In the above embodiment, the PCM 70 is configured to control the fuel injector 20 to maintain each of the injection intervals defined by the crank angle period approximately constant, because, even if the engine load changes, the time period corresponding to the combustion cycle period does not change, differently from the case where the engine speed changes.

In the above embodiment, the PCM 70 is configured to control the fuel injector 20 to stepwisely increase the fuel injection amounts of the pre-stage injections, toward the main injection, so that it is possible to continuously increase the heat release rate more effectively through the pre-stage injections.

### LIST OF REFERENCE SIGNS

1: engine body
2: cylinder
4: piston
7: crankshaft
8: connecting rod
20: fuel injector
30: intake passage
40: exhaust passage
60: turbocharger
70: PCM

## Claims

1. A fuel injection control method for a diesel engine configured to, during one combustion cycle, perform multiple fuel injections to induce multiple combustions in a cylinder, the method comprising:
starting a first fuel injection, at a first timing during compression stroke;
starting a second fuel injection, at a second timing during the compression stroke, at which a time period corresponding to a first crank angle period has elapsed after a completion of the first fuel injection; and
starting a third fuel injection, at a third timing around a top dead center of the compression stroke, at which a time period corresponding to a second crank angle period has been elapsed after a completion of the second fuel injection,
wherein the second crank angle period is less than the first crank angle period.

2. The fuel injection control method according to claim 1, further comprises gradually increasing each of the first and second crank angle periods, as an engine speed of the diesel engine becomes higher.

3. The fuel injection control method according to claim 2, wherein a rate of increase of the first crank angle period with respect to an increase of the engine speed is substantially equal to a rate of increase of the second crank angle period with respect to the increase of the engine speed.

4. The fuel injection control method according to any one of claims 1 to 3, wherein each of the first and second crank angle periods is substantially constant, irrespective of a change in an engine load of the diesel engine.

5. The fuel injection control method according to any one of claims 1 to 4, further comprises setting an injection amount of the second fuel injection to be greater than an injection amount of the first fuel injection, and setting an injection amount of the third fuel injection to be greater than the injection amount of the second fuel injection.

6. A fuel injection control system for a diesel engine configured to, during one combustion cycle, perform multiple fuel injections to induce multiple combustions in a cylinder, the system comprising:
a fuel supply device for injecting fuel into the cylinder; and
a controller for controlling the fuel supply device,
wherein the controller is configured to control the fuel supply device to:
start a first fuel injection, at a first timing during compression stroke;
start a second fuel injection, at a second timing during the compression stroke, at which a time period corresponding to a first crank angle period has elapsed after a completion of the first fuel injection; and
start a third fuel injection, at a third timing around a top dead center of the compression stroke, at which a time period corresponding to a second crank angle period has been elapsed after a completion of the second fuel injection,
wherein the second crank angle period is less than the first crank angle period.

7. The fuel injection control system according to claim 6, wherein the controller is configured to control the fuel supply device to gradually increase each of the first and second crank angle periods, as an engine speed of the diesel engine becomes higher.

8. The fuel injection control system according to claim 7, wherein the controller is configured to control the fuel supply device such that a rate of increase of the first crank angle period with respect to an increase of the engine speed is substantially equal to a rate of increase of the second crank angle period with respect to the increase of the engine speed.

9. The fuel injection control system according to any one of claims 6 to 8, wherein the controller is configured to control the fuel supply device such that each of the first and second crank angle periods is substantially constant, irrespective of a change in an engine load of the diesel engine.

10. The fuel injection control system according to any one of claims 6 to 9, wherein the controller is configured to control the fuel supply device to set an injection amount of the second fuel injection to be greater than an injection amount of the first fuel injection, and set an injection amount of the third fuel injection to be greater than the injection amount of the second fuel injection.
